(19) Europäisches Patentamt
European Patent Office
Office européen des brevets

(11) **EP 3 933 469 A1**

(12) **EUROPEAN PATENT APPLICATION**

(43) Date of publication:
**05.01.2022 Bulletin 2022/01**

(51) Int Cl.:
**G02B 6/12** *(2006.01)* **G02B 6/293** *(2006.01)*
**G02B 27/48** *(2006.01)* **G06E 3/00** *(2006.01)*
**G06N 3/067** *(2006.01)* G06F 17/10 *(2006.01)*
**G02B 6/28** *(2006.01)*

(21) Application number: **20305751.8**

(22) Date of filing: **03.07.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **LightOn**
**75002 Paris (FR)**

(72) Inventors:
• **Müller, Kilian**
**75019 Paris (FR)**
• **Carron, Igor**
**75002 Paris (FR)**
• **Daudet, Laurent**
**75003 Paris (FR)**

(74) Representative: **Osha Liang**
**2, rue de la Paix**
**75002 Paris (FR)**

(54) **INTEGRATED PHOTONIC MIXING DEVICES AND OPTICAL COMPUTING SYSTEMS INCLUDING SUCH DEVICES**

(57) The present description relates, according to one aspect, to an integrated photonic mixing device (400) comprising : a beam splitter (420) configured to receive an initial electromagnetic (EM) wave and generate a plurality of input EM waves (21); a plurality of integrated modulators (430) wherein each integrated modulator is configured to receive an input EM wave from said plurality of input EM waves (21), receive an input data from a plurality of input data (931) and emit a modulated EM wave (51) resulting from a modulation of a parameter of said input EM wave using said input data (931); an integrated mixing structure (100, 200), optically coupled to said plurality of integrated modulators (430), configured to randomly scatter said plurality of modulated EM waves (51) at a plurality of occurrences and generate a speckle pattern; and a plurality of optical detectors (480), optically coupled to said integrated mixing structure (100, 200) and configured to detect optical intensities of portions of said speckle pattern and generate a plurality of output data (932).

FIG.1

EP 3 933 469 A1

# Description

## TECHNICAL FIELD OF THE INVENTION

The invention relates to integrated photonic mixing devices. It further relates to optical computing systems implementing such devices.

## BACKGROUND OF THE INVENTION

The increasing amount of data that are treated in modern computing applications challenges the current hardware capabilities. Treating large data sets requires the execution of a large quantity of algebraic operations for which methods of statistical Machine Learning, and Numerical Linear Algebra (NLA) are commonly employed. Such methods comprise, for example, stochastic gradient descent solvers, reservoir computing, large scale random kernels, extreme machine learning, echo state machines, randomized NLA algorithms, locally sensitive hashing, or iterative eigen solvers. Such methods are typically performed using central processing units (CPU) or graphics processing units (GPU).

As an example, Randomized Numerical Linear Algebra (RNLA) can be used to reduce the dimensionality of large data sets, thereby speeding up the following computation. Further, in conjunction with a non-linearity, RNLA may be used to approximate kernel functions and make data sets linearly separable, possibly through projections of data sets to higher dimensions. In practice, RNLA techniques may be performed through the random projection of a vector, i.e. left- or right-multiplying a vector by a fixed random matrix.

It is possible to use optics to implement any digital processing involving but not limited to the aforementioned methods. US Patent 10,313,018 describes such an optical implementation of a RNLA operation using an optical computing system, or optical processing unit (OPU). In particular, the multiplication of an input vector by a random matrix is implemented optically by using an OPU comprising a device where light undergoes multiple scattering, that will be referred to as a mixing device in the present disclosure. Due to a large number of scattering events occurring in the mixing device, the transport of light in the mixing device is characterized by a transmission matrix that is a random matrix. When compared to classical computer-based methods, the optical implementation of a random projection can be advantageous in regard of power consumption, the possibility to parallelize the operations and the throughput of data that can be obtained.

More specifically, US Patent 10,313,018 describes a macroscopic OPU using free-space optics comprising a macroscopic mixing device for implementing a random projection. However, the use of macroscopic components in the mixing device may in certain cases make the system susceptible to variations of environmental parameters, like temperature. Thus, a reduced form factor is preferred in order to facilitate the control of the environmental parameters, and further improve the perspective for mass-production and lower the manufacturing costs.

As disclosed in Valley, George C., et al. "Application of laser speckle to randomized numerical linear algebra." Optical Data Science: Trends Shaping the Future of Photonics. Vol. 10551, International Society for Optics and Photonics (2018) and in US Patent 10,095,262, other optical implementations of a random projection are known. More specifically, such prior arts disclose an optical computing system comprising a mixing device based on a multimode waveguide that is a photonic integrated circuit (PIC). Such an integrated multimode waveguide provides a mixing device with a reduced form factor that lends itself better to integration with other components. Nevertheless, the dimensions of the multimode waveguide necessary to achieve sufficient mixing can still reach a width of about a hundred micrometers and a length of about 5 to 10 cm, making it necessary to use a surface area that can be larger than about 5 mm$^2$.

There is thus a need for a mixing device with an even smaller form factor that can be easily integrated with microelectronics and micro-photonic components and reduce the dimensions of an OPU system implementing the device.

## SUMMARY

In what follows, the term "comprise" is synonym of (means the same as) "include" and "contains", is inclusive and open, and does not exclude other non-recited elements. Moreover, in the present disclosure, when referring to a numerical value, the terms "about" and "substantially" are synonyms of (mean the same as) a range comprised between 80% and 120%, preferably between 90% and 110%, of the numerical value.

In the following description, "Silicon Oxide", "Silicon Dioxide" and "Silica" are synonyms.

In the following description, refractive indices are specified at a telecom wavelength, i.e. a wavelength comprised between about 1.2 micrometers and about 1.7 micrometers.

According to a first aspect, the present disclosure relates to an integrated photonic mixing device, comprising:

a beam splitter configured to receive an initial electromagnetic wave (EM) and generate a plurality of input EM waves from said initial EM wave;
a plurality of integrated modulators, wherein each integrated modulator from said plurality of integrated modulators is configured to:

receive an input EM wave from said plurality of input EM waves;
receive an input data from a plurality of input data; and
emit a modulated EM wave resulting from a modulation of a parameter of said input EM wave using said input data;

an integrated mixing structure, optically coupled to said plurality of integrated modulators, comprising:

a first layer comprising a first material;
a second layer comprising a second material, arranged on one side of said first layer; and,
a plurality of scattering centers comprising a third material, arranged in said second layer, wherein said scattering centers are configured to randomly scatter said plurality of modulated EM waves at a plurality of occurrences, and generate a speckle pattern; and

a plurality of optical detectors, optically coupled to said integrated mixing structure, and configured to detect optical intensities of portions of said speckle pattern, the plurality of optical detectors thus generating a plurality of output data.

In the following description, the terms "integrated", "integrated photonic", "photonic integrated circuits" or "PIC" are understood as characterizing devices that can receive, transmit or act on optical signals and that can be fabricated using wafer-scale technology (such as lithographic techniques). Such devices can comprise optical components and electronics components.

In the following description, optical signals are understood as examples of EM waves.

By "scattering", it is meant a process by which an EM wave is forced to elastically deviate from straight trajectories by non-uniformities of the refractive index in a medium.

By virtue of the integrated photonic mixing device as disclosed, the mixing structure may be an integrated chip fabricated using lithographic techniques that can remain small, making it suitable for integration with other integrated components.

The reduced footprint of the integrated photonic mixing device enhances the stability of the device against fluctuations of environmental parameters (e.g. temperature) and further improves the perspective for mass-production.

According to one or further embodiments, the device further comprises a plurality of input single-mode waveguides configured to optically couple said plurality of integrated modulators to said integrated mixing structure.

According to one or further embodiments, the device further comprises a plurality of output single-mode waveguides configured to optically couple said integrated mixing structure to said plurality of optical detectors.

According to one or further embodiments, the number of said input single-mode waveguides is different from the number of said output single-mode waveguides. Or equivalently, one may choose to only use a subset of said input waveguides and/or a subset of said output waveguides so that the number of used input waveguides is different from the number of used output waveguides.

By virtue of this difference between the number of used input single-mode waveguides and the number of used output single-mode waveguides, the device can have a transmission matrix which is not square. A non-square transmission matrix implies that the dimensionality of the input vector is different to the dimensionality of the output vector. The input vector is therefore projected to a lower or higher dimension vector space.

Projection of an input vector to a lower dimension vector space can advantageously result in a dimensionality reduction to simplify and speed up computation.

By virtue of an inherent nonlinearity due to the detection of optical intensities by the optical detectors, projection of an input vector to a higher dimension vector space can advantageously be used to approximate kernel functions and to make the input data linearly separable.

According to one or further embodiments, the device further comprises a cap layer comprising a fourth material in contact with said second layer. Said fourth material may be the same as said third material.

By virtue of the cap layer, the integrated mixing device can be protected from disturbance from the environment, such as dust, scratches, or humidity.

According to one or further embodiments, said plurality of scattering centers comprises a predetermined number of scattering centers arranged at predetermined locations configured to cause an average number of scattering events in said integrated mixing structure.

Advantageously, the fact that the scattering is induced by scattering centers at predetermined locations provides a control over the average number of scattering events and the properties of the transmission matrix, and improves the reproducibility of the transmission matrix.

In the present description, the average number of scattering events (or occurrences) is a statistical average of the number of scattering events occurring in the integrated mixing structure upon propagation of an EM wave in the integrated mixing structure due to the presence of scattering centers.

The average number of scattering events occurring in the integrated mixing structure may be calculated, for example, through numerical simulations of the propagation of light in said integrated mixing structure.

The applicant observed that the reproducibility of the transmission matrix of a given integrated photonic mixing device is an important parameter because it could allow for the parallelization of a RNLA operation by using multiple integrated photonic mixing devices with identical transmission matrices, making it possible to reduce significantly the computational time.

According to one or further embodiments, said locations of the scattering centers are calculated using numerical simulations with the constraint of minimizing losses in the integrated mixing structure due, for example, to scattering of said EM waves out of a plane of the second layer.

According to one or further embodiments, said numerical simulations comprise a finite element analysis.

According to one or further embodiments, said locations of the scattering centers are calculated using a semi-random distribution, with a minimal distance between neighboring scattering centers. It is thus possible to minimize the loss experienced by an EM wave upon propagation through the integrated mixing structure.

According to one or further embodiments, said plurality of scattering centers comprises between about 10 and about 1000 scattering centers.

According to one or further embodiments, said scattering centers may have a cylindrical geometric shape, with an axis perpendicular to the 2D geometry of said second layer.

According to one or further embodiments, said scattering centers may comprise microscopic structures, with dimensions between about 0.1 micrometers and about 2 micrometers. The dimensions of said microscopic structures are currently limited by fabrication constraints above around 0.1 micrometers.

The dimensions of the microscopic structures can advantageously be chosen to be smaller than a predetermined wavelength if isotropic scattering of light at this wavelength is desired within said integrated mixing structure.

The dimensions of the microscopic structures can advantageously be chosen to be larger than a predetermined wavelength if anisotropic scattering of light at this wavelength is desired within said integrated mixing structure.

Advantageously, said locations, geometric shape, and dimensions of the scattering centers, may allow for a fine-tuning of the average number of scattering events occurring in the integrated mixing structure. For example, the isotropy of the scattering can be tuned by adjusting the size of the scattering centers with respect to the wavelength of the input EM waves. The average distance (mean free path) between two scattering events can be tuned by adjusting the distance between the scattering centers. The average number of scattering events can be adjusted by the size of the mixing structure.

According to one or further embodiments, the integrated photonic mixing device further comprises a reflective boundary, surrounding the totality of said plurality of scattering centers, and comprising an input port configured to receive said plurality of modulated EM waves and an output port configured to transmit said plurality of portions of said speckle pattern; wherein said reflective boundary is configured to reflect said plurality of modulated EM waves propagating inside said second layer.

According to one or further embodiments, said reflective boundary comprises a photonic crystal. For example, said input EM waves have a given spectral range and said photonic crystal has a bandgap comprising said spectral range. By virtue of the photonic crystal, input EM waves propagating inside said integrated mixing structure are prevented from leaking through said reflective boundary, hereby limiting the loss of optical power in said integrated mixing structure.

According to one or further embodiments, said third material has a refractive index different from the refractive index of said second material. For example, the difference between the refractive index of the second material and the refractive index of the third material is equal to or larger than 0.2, advantageously equal to or larger than 1, in order to provide sufficient scattering of light by the scattering centers.

According to one or further embodiments, said scattering centers are made of holes in said second material and said third material is air.

According to one or further embodiments, said first material comprises Silicon Oxide.

According to one or further embodiments, said second material comprises Silicon.

According to one or further embodiments, said second material comprises Indium Phosphide.

According to one or further embodiments, said third material comprises Silicon Oxide.

According to one or further embodiments, the integrated photonic mixing device as disclosed further comprises a substrate layer comprising a fifth material arranged on one side of said first layer opposite to said second layer, wherein said fifth material comprises Silicon.

According to one or further embodiments, said plurality of integrated modulators comprise integrated amplitude modulators or integrated phase modulators.

According to a second aspect, the present disclosure relates to a method for implementing an absolute square of a random projection, comprising:

splitting an initial EM wave into a plurality of input EM waves using a beam splitter;
modulating said plurality of input EM waves using a plurality of integrated modulators, wherein each integrated modulator from said plurality of integrated modulators:

receives an input EM wave from said plurality of input EM waves;
receives an input data from a plurality of input data; and,
emits a modulated EM wave resulting from a modulation of a parameter of said input EM wave using said input data;

generating a speckle pattern using an integrated mixing structure optically coupled to said plurality of integrated modulators, wherein said integrated mixing structure comprises:

a first layer comprising a first material;

a second layer comprising a second material, arranged on one side of said first layer; and,

a plurality of scattering centers comprising a third material, arranged in said second layer, wherein said scattering centers are configured to randomly scatter said plurality of modulated EM waves at a plurality of occurrences, and generate a speckle pattern; and

detecting optical intensities of portions of said speckle pattern using a plurality of optical detectors in order to generate a plurality of output data.

According to a third aspect, the present disclosure relates to an optical computing system comprising:

a laser source, configured to generate an initial EM wave; and

an integrated photonic mixing device according to any embodiment of the first aspect, configured to receive said initial EM wave, and generate a plurality of output data from a plurality of input data.

By virtue of the structure of the integrated photonic mixing device according to the present disclosure, said plurality of output data may be an absolute square of a random projection of said plurality of input data.

According to one or further embodiments, the optical computing system further comprises a processing unit, configured to generate said plurality of input data; receive said plurality of output data; and use said plurality of input data and said plurality of output data to implement an algorithm comprising an absolute square of a random projection.

BRIEF DESCRIPTION OF DRAWINGS

Other advantages and features of the invention will become apparent on reading the description, illustrated by the following figures which represent:

- FIG. 1 is a block diagram of an optical computing system implementing an integrated photonic mixing device according to an embodiment of the present disclosure;
- FIG. 2A and 2B schematically illustrate an integrated mixing structure according to an embodiment of the present disclosure in a top-view and in a cross-section view, respectively;
- FIG. 3 schematically illustrates the coupling of electromagnetic waves in and out of an integrated mixing structure using a plurality of input single-mode waveguides and a plurality of output single-mode waveguides according to embodiments of the present disclosure;

- FIG. 4 schematically illustrates an integrated mixing structure fabricated using silicon-on-insulator (SOI) technology according to an embodiment of the present disclosure;
- FIG. 5 schematically illustrates a top view of a layer of the integrated mixing structure of FIG. 4.

DETAILED DESCRIPTION

In the figures, the elements are not shown to scale for better visibility. In particular the horizontal and vertical axes are shown on different scales for better visibility. Further, on each of the vertical and horizontal axes, the heights and respectively the widths of the different structures and layers can be significantly different, in particular according to the specificities and constraints of implementation.

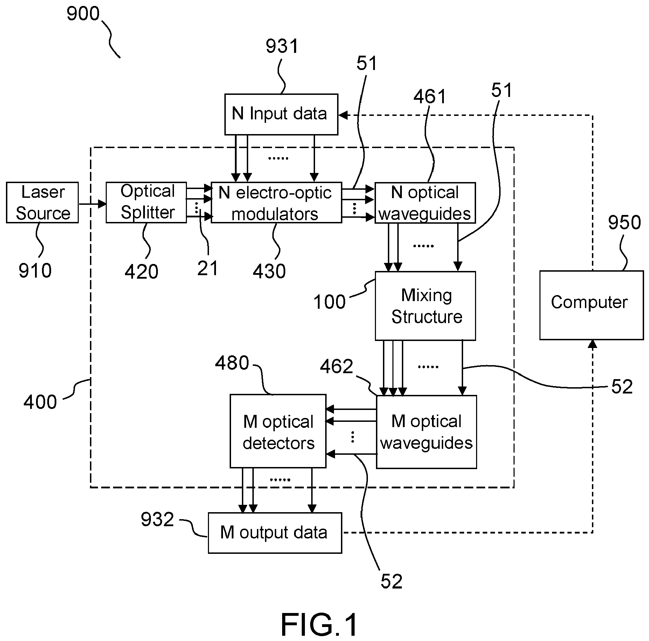

FIG. 1 represents a block diagram of an optical computing system **900** according to an embodiment of the present disclosure, also referred to as optical processing unit (OPU) in the following description. Such optical processing unit aims at optically performing an absolute square of a random projection on given input data **931** and to provide the result of the operation as output data **932**.

The OPU **900** comprises a laser source **910** and an integrated photonic mixing device **400.** The laser source **910** generates an initial electromagnetic (EM) wave. The integrated photonic mixing device receives the initial EM wave and the input data **931**, e.g. $N$ input data, where $N$ is an integer. In order to implement an algorithm using the OPU, a processing unit **950** (also referred to as a computer in the present description) may also be used to generate the input data **931** and to receive the output data **932**.

In the example of FIG. 1, the integrated photonic mixing device comprises a beam splitter **420** (or optical splitter in the present description); a plurality of integrated modulators **430,** e.g. $N$ electro-optic modulators; an optional plurality of input optical waveguides **461,** e.g. $N$ input optical waveguides; an integrated mixing structure **100;** an optional plurality of output optical waveguides **462,** e.g. $M$ output optical waveguides, where $M$ is an integer and a plurality of optical detectors **480** e.g. $M$ optical detectors.

The processing unit **950** is referred in the present description as a single component but may comprise a plurality of distinct electronic components. The processing unit **950** can for instance be, or comprise, a processing unit such as a central processing unit (CPU), a graphics processing unit (GPU), a field programmable gate array (FPGA), an application-specific integrated circuit (ASIC) and/or any type of such processing unit known in the art. The processing unit **950** and the OPU **900** are connected together, directly or through interconnection electronic components (not shown in FIG. 1).

The input data **931** may typically comprise a vector X of N components, and the output data may comprise a vector Y of M components that can be defined by

$Y = |S X|^2$, where S is the transmission matrix characterizing the integrated mixing structure **100**.

The input data **931** may be data resulting from the pre-processing of digital input data fed to the OPU **900**. Such digital input data may be any kind of data: images, videos, text, sound, time series, or more abstract data, e.g. data which are the output of an algorithm such as a neural network.

The pre-processing of said digital input data may be made using a digital input circuit (not shown in FIG. 1). The pre-processing stage may ensure that the input data **931** is accepted by the modulators **430** and can be encoded on an EM wave through modulation. A color image, for example, may be converted to grayscale, in which each gray level corresponds to a modulation level.

The digital input data can be transformed to an analog signal using, for example, a plurality of digital-to-analog converters (DACs), before being sent to the modulators.

At the output of the detectors **480,** the output data **932** are analog and can be transformed to digital data using, for example, a plurality of analog-to-digital converters (ADCs).

The further use of the digital output data **932** depends on the algorithm that the operation performed on the OPU is part of. For example, if the operation performed on the OPU precedes the last dense layer of a neural network, the output data **932** may then be sent to a classifier; if the operation on the OPU **900** is part of a recurrent neural network, the output data **932,** may be sent back to the OPU **900;** if the operation performed on the OPU is a preprocessing step of a randomized linear algebra algorithm, the output data **932,** may be sent to a sequence of linear algebra transformation, such as matrix factorization schemes. Depending on the application, the dimensionality of the output data **932** may be smaller or equal or larger than the dimensionality of the input data **931.**

The laser source **910** may comprise a continuous wave (CW) laser or a laser with a spectrum within a given wavelength range. In order to have a high spectral coherence the spectrum of the laser source must be sufficiently narrow, for example less than about 80 nm.

In an embodiment of the present disclosure, wherein the integrated mixing structure is fabricated with materials based on Silicon, a wavelength between about 1310 nm and about 1565 nm may be used. For example, a wavelength of about 1.5 micrometers may be used since the absorption coefficient of Silicon and Silicon Oxide is low at this frequency.

The laser source **910** may be coupled to the beam splitter **420** via one or several waveguides, for example polarization maintaining single-mode waveguides.

The beam splitter **420** receives the initial EM wave from the laser source **910,** and splits it into N different input EM waves **21.**

For example, the beam splitter can comprise three optical waveguides arranged according to an architecture in shape of a y-branch. Therefore, the initial EM wave in one of the optical waveguides can be split into two input EM waves, with a splitting ratio being 50:50. A cascaded plurality of optical waveguides in y-branches may therefore be used to multiply the number of EM waves by two in each step.

As an example, in order to split a waveguide into 128 separate waveguides, seven steps can be necessary, with a total number of 127 y-branches. In the case of waveguides based on Silicon Photonics, one y-branch may be about 10 micrometers long, and inferior to about 5 micrometers wide, the optical splitter may therefore occupy an area of about half a squared mm, preferably about 0.02 squared mm.

In an embodiment of the present disclosure N may be comprised between about 10 and about 1000. Due to fabrication constraint inherent to the current state of the art of the technology, N of about 100 can easily be achieved and N of about 1000 is a limit.

The N input EM waves **21** are coupled into the plurality of N integrated modulators **430** and are then modulated independently.

The integrated modulators **430** encode the input data **931** on the input EM waves **21** through modulation of the input EM waves **21.**

In the present description, "modulating an EM wave" is understood as "modulating a parameter of an EM wave". Said parameter can be, for example, the phase or the amplitude of the EM wave, resulting in a phase modulation or an amplitude modulation, respectively.

According to an embodiment of the present disclosure, the integrated modulators are analog devices.

In the case of a phase modulation, the phase of an input EM wave can be modulated between 0 and $2\pi$. In the case of an amplitude modulation, the amplitude of an input EM wave can be modulated between a maximal and a minimal value depending on the specifications of the integrated modulators **430.**

More specifically, the integrated modulators **430** can, for example, be PN-Junction phase shifters, micro-ring modulators, or forward-biased PIN junctions. As alternative examples, Mach-Zehnder interferometers, or ring resonators can also be employed.

In practice, a modulator can encode a given number of different values on an input EM wave depending on the number distinct signals sent by the DACs. This number of distinct signals is given by a number of bits, the "modulation bit depth" of the DACs. For example, if the "modulation bit depth" of the DACs is 1, then only two EM wave state are possible at the output of a modulator (for example a phase of 0 or $\pi$).

Similarly, one can define a "detection bit depth" related to the number of states that can be detected by the combined system of detectors **480** and analog to digital converters (ADCs). For example, if the "detection bit depth" of the ADCs is 1, then only a dark state or a bright state can be recorded. However, many data science and machine learning algorithms will benefit from higher bit depth for modulation and detection.

The maximum rate of the modulation, i.e. the maximum frequency at which data can be encoded on an input EM wave in a given amount of time may depend on modulation bit depth and the maximum throughput of the input data **931** from the processing unit **950** through the DACs to the modulators **430.** Similarly, the maximum rate of detection, i.e. the maximum frequency at which data can be detected by the optical detectors **480,** encoded to a digital signal by ADCs and sent to the processing unit **950** may depend on the "detection bit depth", as well as the maximum throughput of the output data **932** to the processing unit **950.**

Current state of the art integrated modulators and detectors may be operated at a rate up to about 100 GHz.

According to an embodiment of the present disclosure, the integrated mixing structure **100** receives the modulated EM waves **51,** for example through *N* input optical waveguides **461,** and generates a speckle pattern from which *M* portions are sent to *M* optical detectors **480,** for example through *M* output optical waveguides **462.** The *M* portions of speckle are coupled to the *M* output optical waveguides **462** and propagate through said waveguides as EM waves, that will be referred to as output EM waves **52.**

The input and output optical waveguides **461, 462** can be for example integrated single-mode waveguides. Losses along these waveguides are, for example, about 2 dB/cm or less.

In the present disclosure, a speckle pattern is understood as a two-dimensional light pattern with a random light intensity distribution that is due to interference between multiple coherent EM waves having different amplitudes and phases.

In the present disclosure, a portion of speckle is a part of the speckle pattern. For example, the speckle pattern can be directed to a plurality of optical waveguides and each optical waveguide of the plurality of optical waveguides receives a portion of the speckle pattern.

The optical detectors **480** may be integrated photoconductive or PIN photodetectors that can detect EM waves with a wavelength that is comprised, for example, in a telecommunication wavelength range between about 1310 nm and about 1565 nm. The detectors are, for example, placed at the end of the output optical waveguides **462** where they detect the squared magnitude of the amplitude of EM waves reaching their surface and provide an output current or voltage lying on a continuum between zero and a certain maximum depending on the detector. The optical detectors may be operated up to 100 GHz.

The integrated photonic mixing device **400** can also comprise other active elements such as temperature probes and heating elements. The latter may be used either for temperature control of the integrated photonic mixing device **400,** or for the adjustment of Mach-Zehnder interferometers when they are used as modulators (heating one arm of the interferometer one can control the splitting ratio at the output). For all these active components, electrical connectivity to an electric circuit board can be necessary. This may be achieved by standard methods in the integrated circuit industry: wire bonding, or flip-chip bonding. The latter provides a high density of connections, and a high throughput of data. The former may be easier to manufacture. The electric circuit board may in turn be connected to the processing unit **950.**

The frequency at which an OPU using the integrated mixing device **400** according to the present disclosure can be used can be larger than in macroscopic systems disclosed in the prior art. For example, the frequency can be about 1 to 10 GHz for an OPU using an integrated photonic mixing device according to an embodiment of the present disclosure, instead of about 10 kHz for an OPU using macroscopic elements. A reason for this difference may originate from the large bandwidth capabilities of integrated photonics components such as electrooptic phase and amplitude modulators and optical detectors compared to the similar components in a macroscopic version.

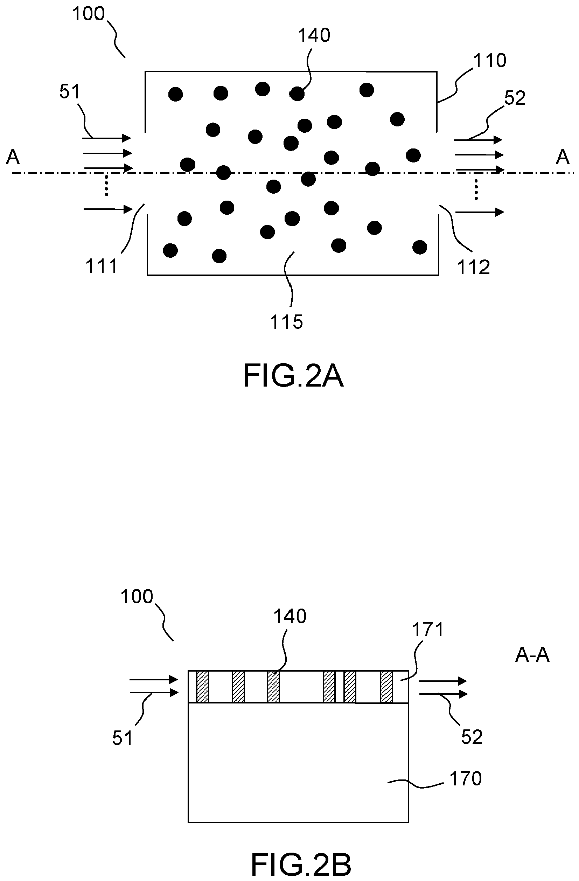

FIG. 2A-2B illustrate schematically an integrated mixing structure **100** according to an embodiment of the present disclosure.

As shown in FIG. 2A, the integrated mixing structure **100** comprises a plurality of scattering centers **140,** a scattering medium **115,** a reflective boundary **110,** an input port **111,** an output port **112.**

As shown in FIG. 2B, the integrated mixing structure **100** further comprises at least two layers of different materials, a first layer **170** that forms the basis of the integrated mixing structure **100** and a second layer **171,** arranged on one side of said first layer, that comprises the scattering centers **140.** The first layer **170** comprises a first material and the second layer **171** comprises a second material.

The scattering centers **140** are "defects" in the second layer **171** of the integrated mixing structure **100** that have a different refractive index compared to the second layer **171.** Therefore, the scattering centers **100** can be made of a third material that has a refractive index that is different from the refractive index of the second material.

The difference between the refractive index of the second material and the refractive index of the third material needs to be large enough to allow for sufficient scattering of EM waves on the scattering centers **140,** for example larger or equal than 0.2, preferably equal or large than 1.

The scattering centers **140** can for example be microstructures of a particular predetermined geometric shape.

According to one or further embodiments of the present disclosure, the scattering centers **140** have a cylindrical geometric shape, with the cylinder's axis perpendicular to the second layer **171,** i.e. perpendicular to the 2D geometry of the integrated mixing structure **100.** The scattering centers **140** can be filled with a material that has a refractive index different from the material of the second layer **171.** This material can be the same as the material used in the first layer **170.** For example, scattering centers **140** can be holes filled with a material comprising Silicon Oxide.

According to the embodiment of FIG. 2A-2B, the plurality of scattering centers **140** are semi-randomly distributed in the scattering medium **115** delimited by the reflective boundary **110** that is provided with the input port **111** and the output port **112.** The integrated mixing structure is configured to receive the plurality of modulated EM waves **51** through the input port **111** and to generate a speckle pattern at the output port **112.**

The input port **111** and output port **112** are openings in the reflective boundary **110** that allow EM waves to respectively enter and exit the scattering medium **115.** The dimensions of the input port **111** and output port **112** are thus chosen according to the number of waves that are required to enter or leave the scattering medium which may be, for example between 100 and 1000 EM waves.

Upon propagation through the scattering medium **115,** between the input port **111** and the output port **112,** input EM waves **51** scatter a multiple number of occurrences off of the scattering centers **140** and interfere so that a speckle pattern is formed at the output port **112.**

Intensities of portions of the speckle pattern are registered by the optical detectors **480.** The portions of the speckle pattern are sent to the optical detectors **480** using, for example, output optical waveguides **462.** The portions of the speckle pattern may be considered as secondary EM sources generating a plurality of output EM waves **52.** The dimensions of the input port **111** and output port **112** are thus chosen so that predetermined numbers of input and output EM waves **51, 52** can be coupled in and out of the scattering medium **115,** respectively.

More specifically, the speckle pattern may be characterized by a given speckle grain size depending on the geometry of the integrated mixing structure **100,** the output port **112,** the wavelength of the input EM waves **51,** the refractive index of the scattering medium **115** and the refractive index of the scattering centers **140.** The portions of speckle pattern may therefore be selected so that two adjacent portions are separated by a distance superior to about the average speckle grain size. Such a selection may provide portions of speckle having intensities that are not correlated.

In practice, this can be done by using a plurality of output single-mode waveguides **462,** starting at the output port **112,** in which adjacent waveguides are separated by more than the average size of a speckle grain.

That way one can ensure that the intensities of two adjacent portions of speckle pattern picked up by two adjacent optical waveguides **462** are not correlated and, consequently, that two adjacent output EM waves **52** have intensities that are not correlated either.

In the context of the present disclosure, correlation refers to the fact that knowledge of an intensity distribution in one speckle portion implies knowledge of an intensity distribution in a second speckle portion.

An average size of a speckle grain may be calculated using an auto-correlation of the intensity of the speckle pattern. The intensity distribution of the average speckle grain may be incompletely known but can be assumed to follow a gaussian distribution. In the case of a gaussian distribution, the average size of a speckle grain can be calculated using a gaussian fit.

In one or further embodiment of the present disclosure, the scattering centers **140** are "semi-randomly" distributed within the scattering medium **115,** which implies that their locations follow a random distribution with an additional constraint on a chosen parameter.

In one or further embodiments of the present disclosure the additional constraint is a minimum distance imposed between neighboring scattering centers **140.**

An optimal distribution of the scattering centers **140** in the scattering medium **115,** including the minimum distance between neighboring scattering centers **140,** may be found via numerical simulations using a finite element analysis that can be carried out, for example, with the COMSOL® software.

For example, an optimal distribution may be found by simulating different distributions and comparing the corresponding optical losses that are induced by the integrated mixing structure **100** upon propagation of EM waves inside the scattering medium **115.** It is thus possible to find a distribution that minimizes the optical losses due to scattering of EM waves out of the plane of the second layer **171.** Minimizing the losses may be advantageous to decrease the required optical power of the laser source **910.**

The possible number of scattering centers **140** in the scattering medium **115** depends, *inter alia,* on the geometry of the integrated mixing structure **100** and on the number of input and output EM waves **51, 52** and may be estimated to be between about 100 and about $10^6$.

The physical dimensions of the integrated mixing structure **100** are chosen in order that a typical average number of scattering events (also called scattering occurrences in the present description) between an input EM wave from the plurality of input EM waves **51** and scattering centers **140** is equal to a certain number (for example a number between about 1 and about 1000). Depending on the average number of scattering events occurring in the integrated mixing structure **100,** the transmission matrix may be a sparse or a dense random matrix.

Mathematically, the sparsity of a matrix can be defined as the number of zero-valued elements in the matrix divided by the total number of elements of the matrix. Further, the density of a matrix can be defined as **1 - SP**, where SP is the sparsity of the matrix.

In the context of the present disclosure, the transmission matrix is considered to be dense when the transmission matrix characterizes a mixing structure in which the average number of scattering events is larger than about 10, and the transmission matrix is considered to be sparse when the average number of scattering events is smaller than about 10.

The integrated mixing structure **100** may be made of materials that are not opaque to telecom wavelengths. In particular, a wavelength of about 1.5 micron may be used because the absorption coefficient of Silicon and Silicon Oxide is very low at this frequency and because laser sources emitting light close to this wavelength are readily available

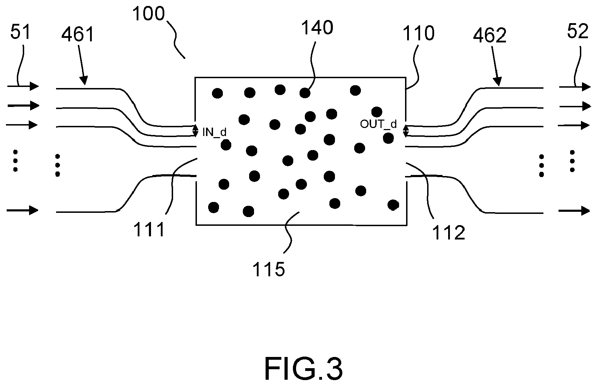

FIG. 3 illustrates the means by which optical signals may be coupled in and out of the integrated mixing structure **100** according to an embodiment of the present disclosure.

According to an embodiment of the present disclosure, a plurality of input single-mode waveguides **461** is configured to couple the plurality of input EM waves **51** to the integrated mixing structure **100** through the input port **111**. Further, a plurality of output single-mode waveguides **462** is configured to couple portions of the speckle pattern out of the integrated mixing structure **100** through the output port **112** as output EM waves **52**. The output EM waves **52** are further coupled to the optical detectors **480**.

According to an embodiment of the present disclosure, the widths of the input port **111** and the output port **112** may be predetermined so that they allow the coupling of a maximum given number of EM waves in or out of the scattering medium **115** following the formula hereafter:

$$W = \frac{N * \lambda}{2 * n_e}$$

where $N$ is the number of EM waves to couple in or out of the scattering medium **115**, for example between about 100 and about 1000 EM waves, $\lambda$ is the wavelength of the EM waves in vacuum, and $n_e$ is the effective refractive index of the integrated mixing structure **100** at the wavelength $\lambda$.

In the embodiment of FIG. 3, each input EM wave of the plurality of input EM waves **51** has a dedicated optical waveguide from the plurality of input optical waveguides **461**. The plurality of input optical waveguides **461** are terminating at the input port **111** and are spaced by a distance **(IN_d)** sufficiently large to propagate independently when they are released of their single-mode waveguides. Using the above formula, the minimum distance is equal to $\frac{\lambda}{2\,n_e}$.

Alternatively, it is possible to extend the reflective boundary **110** near the input port **111,** for example, in form of a straight tunnel or a taper.

Similarly, the plurality of output EM waves **52** can be obtained from the integrated mixing structure **100** by having the plurality of output single-mode waveguides **462** starting at the output port **112**. The output single-mode waveguides **462** need to be spaced by a distance **(OUT_d)** sufficiently large to avoid correlation between adjacent outputs, as specified above in the present description.

In the present disclosure, the integrated mixing structure **100** may be an integrated chip-scale device that can be fabricated using lithographic techniques, similarly to photonic integrated circuits (PICs). Therefore, materials used for fabricating the integrated mixing structure **100** can be, for example, materials used in technologies such as Silicon on insulator (SOI or "Silicon Photonics"), Silica-on-Silicon, Indium Phosphide (InP), Lithium Niobate (LiNbO$_3$), Gallium Arsenide (GaAs), Silicon Nitride (SiN$_4$). Each of these materials have advantages and disadvantages when building PICs. Lithium Niobate, for example, allows for the direct implementation of laser sources on the chip. SOI uses well established techniques developed by the semiconductor industries. However, each of these materials may allow for the implementation of the scattering centers described above so that no material is favored in particular in the present disclosure.

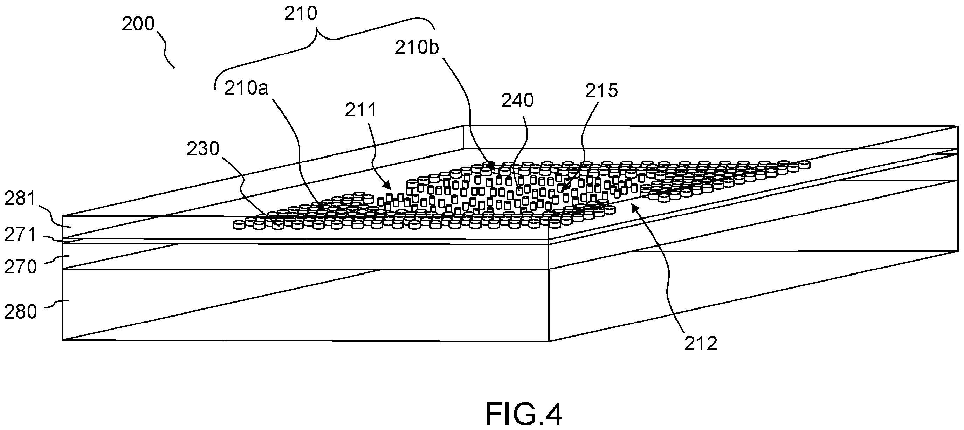

FIG. 4 illustrates an embodiment of the present disclosure, wherein the integrated mixing structure **100** is a Silicon Photonics chip **200** that can be manufactured, for example, by semiconductor fabrication plants (also called foundries). The chip comprises a thick wafer substrate **280** of Silicon placed below a thick buried layer **270** of Silicon Oxide. On top of the buried layer **270** of Silicon Oxide is a thin layer **271** of crystalline Silicon, in which scattering centers **240** are arranged to form a scattering medium **215.**

The thin layer **271** containing the scattering centers **240** may be embedded in a thick cap layer **281** in order to protect the thin layer **271** from the environment (for example from dust, scratches, or humidity). The cap layer **281** can comprise, for example, Silicon Oxide.

In the embodiment of FIG. 4, said scattering centers **240** are fabricated using lithographic techniques and are made of holes in the thin layer **271** that are filled with Silicon Oxide having a refractive index of about 1.45. The thin layer **271** is made of Silicon with a refractive index of about 3.48. Therefore, the difference between the refractive index of the thin layer **271** and the refractive index of the scattering centers **240** is larger or equal to about 2, which is large enough to allow for sufficient scattering of EM waves in the scattering medium **215.**

Other combination of materials for the thin layer

271 and the scattering centers 240 may be used if they have a large enough difference between their refractive indices, in particular, a difference equal or larger to approximately 2. The precise difference in refractive indices between the materials of the combination that is required may be estimated from numerical simulations based on Mie scattering and Rayleigh scattering theories.

In order to provide a good vertical confinement of the light in the chip 200, for a telecom wavelength of 1.5 micron, the thickness of the thin layer of Silicon 271 (i.e. the vertical dimension) is often chosen to be about 220 nm.

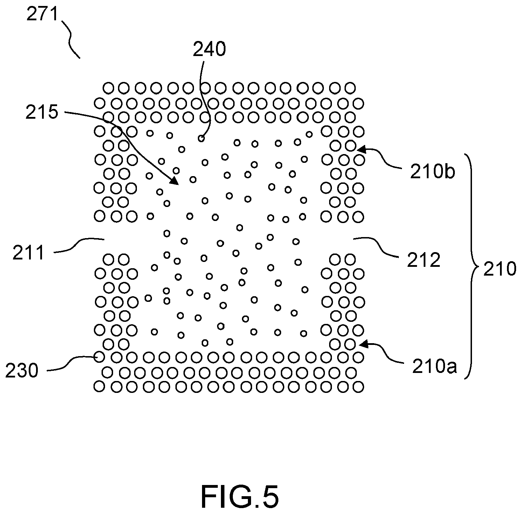

In order to facilitate the understanding of the structure of the Silicon Photonics chip 200, FIG. 5 shows a simplified top-view of the thin layer 271 of crystalline Silicon of the Silicon Photonics chip 200 according to an embodiment of the present disclosure. It is shown that the scattering centers 240 are semi-randomly distributed microstructures arranged in the thin layer 271 of Silicon.

It is also shown that, in an embodiment of the present disclosure, the scattering medium 215 is surrounded by a reflective boundary 210 comprising a first part 210a and a second part 210b. The reflective boundary 210 is implemented by a regular lattice arrangement of microstructures 230 in the silicon thin layer 271.

The reflective boundary 210 is therefore similar to a photonic crystal with a bandgap at a telecom wavelength that causes reflection of light back towards the scattering medium 215 when light hits the reflective boundary 210, thereby reducing in-plane losses (losses experienced by an optical signal propagating in the chip 200 that are due to leakage trough the lateral sides of the thin layer 271).

In one of further embodiments of the present disclosure, the reflective boundary 210 is configured to reflect EM waves with a wavelength of about 1.5 micrometers and is made of a triangular lattice of structures 230 with radii of about 180 nm and a lattice constant equal to about 505 nm.

Other parameters or combination of parameters may be chosen for the reflective boundary 210 in the cases that a reflection at wavelengths other than 1.5 micrometers is sought.

As disclosed above in the present description, in order to minimize out-of-plane losses (due to scattering of EM waves out of the plane of the thin layer 271), scattering centers 240 may be distributed according to a semi-random distribution with a minimum distance constraint imposed upon distances between neighboring scattering centers.

In an embodiment of the present disclosure, the Silicon Photonics chip 200 is can be configured to receive and transmit light at telecom wavelengths (for example between 1310 nm and 1535 nm) so that the effective refractive index of the integrated mixing structure 100 is about $n_e$=3. Therefore, as an example, the widths of the input and output ports 211, 212 to allow for the coupling of more than 100 EM waves are superior to about 25 micrometers (according to the formula aforementioned).

The longitudinal length of the Silicon Photonics chip 200, i.e. between the input and output port 211, 212 is predetermined so that all input EM waves can interfere sufficiently with each other. The longitudinal length can be preferably of about 25 micrometers.

The surface area of the Silicon Photonics chip 200 can be as small as about a few hundreds of squared micrometers, which is orders of magnitude smaller than in the multimode waveguide approach disclosed in the prior art.

The control of the process by which are implemented the scattering centers 240 in the substrate can allow for a fine-tuning of various parameters of the transmission matrix characterizing the integrated mixing structure 200. The isotropy of the scattering can be tuned by adjusting the size and shape of the defects with respect to the wavelength of the input EM waves 51. The transport mean free path between two scattering events can be tuned by adjusting the distance between the scattering centers 240. Therefore, the average total number of scattering events seen by a light beam between the input port 211 and the output port 212 can also be tuned. The transmission matrix can then be selectively dense (if many scattering centers) or sparse (if few scattering centers).

Although the preceding description has been described herein with reference to particular means, materials and embodiments, it is not intended to be limited to the particulars disclosed herein; rather, it extends to all functionally equivalent structures, methods and uses, such as are within the scope of the appended claims. In the claims, means-plus-function clauses are intended to cover the structures described herein as performing the recited function and not only structural equivalents, but also equivalent structures.

**Claims**

1. An integrated photonic mixing device (400), comprising:

   a beam splitter (420) configured to receive an initial electromagnetic (EM) wave and generate a plurality of input EM waves (21) from said initial electromagnetic wave;
   a plurality of integrated modulators (430), wherein each integrated modulator from said plurality of integrated modulators is configured to:

   receive an input electromagnetic (EM) wave from said plurality of input EM waves (21);
   receive an input data from a plurality of input data (931); and
   emit a modulated EM wave resulting from a modulation of a parameter of said input EM wave using said input data;

an integrated mixing structure (100, 200), optically coupled to said plurality of integrated modulators (430), comprising:

> a first layer (170, 270) comprising a first material;
> a second layer (171, 271) comprising a second material, arranged on one side of said first layer (170, 270);
> a plurality of scattering centers (140, 240) comprising a third material, arranged in said second layer (171, 271), wherein said scattering centers (140, 240) are configured to randomly scatter said plurality of modulated EM waves (51) at a plurality of occurrences, and generate a speckle pattern; and
>
> a plurality of optical detectors (480), optically coupled to said integrated mixing structure (100, 200), and configured to detect optical intensities of portions of said speckle pattern, the plurality of optical detectors thus generating a plurality of output data (932).

2. The integrated photonic mixing device (400) as claimed in claim 1, further comprising:

> a plurality of input single-mode waveguides (461) configured to optically couple said plurality of integrated modulators (430) to said integrated mixing structure (100); and
> a plurality of output single-mode waveguides (462) configured to optically couple said integrated mixing structure (100, 200) to said plurality of optical detectors (480).

3. The integrated photonic mixing device (400) as claimed in claim 2, wherein the number of said input single-mode waveguides (461) is different from the number of said output single-mode waveguides (462).

4. The integrated photonic mixing device (400) as claimed in any one of the preceding claims, wherein said integrated mixing structure (100, 200) further comprises a cap layer (281) comprising a fourth material in contact with said second layer (171, 271), wherein said fourth material is the same as said third material.

5. The integrated photonic mixing device (400) as claimed in any one of the preceding claims, wherein said plurality of scattering centers (140, 240) comprises a predetermined number of scattering centers arranged at predetermined locations configured to cause an average number of scattering events in said integrated mixing structure (100, 200).

6. The integrated photonic mixing device (400) as claimed in claim 5, wherein said predetermined locations of the scattering centers (140, 240) are calculated using a semi-random distribution, with a minimal distance between neighboring scattering centers (140, 240).

7. The integrated photonic mixing device (400) as claimed in any one of the preceding claims, wherein said plurality of scattering centers (140, 240) comprises between about 10 and about 1000 scattering centers.

8. The integrated photonic mixing device (400) as claimed in any one of the preceding claims, wherein said scattering centers (140, 240) have a cylindrical geometric shape with an axis perpendicular to the 2D geometry of said second layer (171, 271).

9. The integrated photonic mixing device (400) as claimed in any one of the preceding claims, wherein said scattering centers (140, 240) comprise microscopic structures, with dimensions between about 0.1 micrometers and about 2 micrometers.

10. The integrated photonic mixing device (400) as claimed in any one of the preceding claims, wherein said integrated mixing structure (100, 200) further comprises:

> a reflective boundary (110, 210), surrounding a totality of said plurality of scattering centers (140, 240), and comprising an input port (111, 211) configured to receive said plurality of modulated EM waves (51) and an output port (112, 212) configured to transmit said portions of said speckle pattern;
> wherein said reflective boundary (110, 210) is configured to reflect said plurality of modulated EM waves (21) propagating inside said second layer (171, 271).

11. The integrated photonic mixing device (400) as claimed in claim 10, wherein said reflective boundary (110, 210) comprises a photonic crystal.

12. The integrated photonic mixing device (400) as claimed in any one of the preceding claims, wherein said first material comprises Silicon Oxide.

13. The integrated photonic mixing device (400) as claimed in any one of the preceding claims, wherein said second material comprises Silicon.

14. The integrated photonic mixing device (400) as claimed in any one of the preceding claims, wherein said second material comprises Indium Phosphide.

**15.** The integrated photonic mixing device (400) as claimed in any one of the preceding claims, wherein said integrated mixing structure further comprises a substrate layer (280) comprising a fifth material arranged on one side of said first layer (170, 270) opposite to said second layer (171, 271), wherein said fifth material comprises Silicon.

**16.** The integrated photonic mixing device (400) as claimed in any one of the preceding claims, wherein said plurality of integrated modulators (430) comprise integrated amplitude modulators or integrated phase modulators.

**17.** An optical method for implementing an absolute square of a random projection, comprising:

> splitting an initial EM wave into a plurality of input EM waves (21) using a beam splitter (420);
> modulating said plurality of input EM waves (21) using a plurality of integrated modulators (430), wherein each integrated modulator from said plurality of integrated modulators (430):

>> receives an input EM wave from said plurality of input EM waves (21);
>> receives an input data from a plurality of input data (931); and
>> emits a modulated EM wave resulting from a modulation of a parameter of said input EM wave using said input data;

> generating a speckle pattern using an integrated mixing structure (100, 200) optically coupled to said plurality of integrated modulators (430), wherein said integrated mixing structure comprises:

>> a first layer (170, 270) comprising a first material;
>> a second layer (171, 271) comprising a second material, arranged on one side of said first layer (170, 270); and
>> a plurality of scattering centers (140, 240) comprising a third material, arranged in said second layer (171, 271), wherein said scattering centers (140, 240) are configured to randomly scatter said plurality of modulated EM wave (51) at a plurality of occurrences, and generate a speckle pattern; and

> detecting optical intensities of portions of said speckle pattern using a plurality of optical detectors (480) in order to generate a plurality of output data (932).

**18.** An optical computing system (900) comprising:

a laser source (910), configured to generate an initial EM wave; and
an integrated photonic mixing device (400) according to claim 1 to 16, configured to receive said initial EM wave and generate a plurality of output data (932) from a plurality of input data (931).

**19.** The optical computing system (900) as claimed in claim 18, further comprising:

> a processing unit (950), configured to:

>> generate said plurality of input data (931);
>> receive said plurality of output data (932); and
>> use said plurality of input data (931) and said plurality of output data (932) to implement an algorithm comprising an absolute square of a random projection.

900

931

51

461

51

| | |
|---|---|
| N Input data | 931 |

950

Laser Source

Optical Splitter

N electro-optic modulators

N optical waveguides

Computer

910

420

21

430

100

Mixing Structure

400

480

462

52

M optical detectors

M optical waveguides

932

M output data

52

FIG.1

100

140

110

51

52

A

A

111

112

115

# FIG.2A

100

140

171

A-A

51

52

170

# FIG.2B

FIG.3

FIG.4

FIG.5

**EP 3 933 469 A1**

Europäisches
Patentamt

European
Patent Office

Office européen
des brevets

# EUROPEAN SEARCH REPORT

Application Number

EP 20 30 5751

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/110992 A1 (HOSSEINZADEH ARASH [US] ET AL) 9 April 2020 (2020-04-09) * figures 1A, 6 * * paragraphs [0411], [0412], [0420], [0429], [0432], [0445], [0498], [0502]-[0510], [0523], [0910] * ----- | 1-19 | INV. G02B6/12 G02B6/293 G02B27/48 G06E3/00 G06N3/067 |
| A | US 2020/125826 A1 (BIENSTMAN PETER [BE] ET AL) 23 April 2020 (2020-04-23) * figure 1 * ----- | 1-19 | ADD. G06F17/10 G02B6/28 |
| A,D | US 10 313 018 B2 (PARIS SCIENCES ET LETTRES-QUARTIER LATIN [FR] ET AL.) 4 June 2019 (2019-06-04) * figures 1-3 * ----- | 1-19 | |

TECHNICAL FIELDS
SEARCHED (IPC)

G02B
G06N
G06E
G06F

The present search report has been drawn up for all claims

| Place of search | Date of completion of the search | Examiner |
|---|---|---|
| The Hague | 2 December 2020 | Zakynthinos, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 30 5751

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2020

| Patent document cited in search report | | Publication date | Patent family member(s) | | Publication date |
|---|---|---|---|---|---|
| US 2020110992 | A1 | 09-04-2020 | NONE | | |
| US 2020125826 | A1 | 23-04-2020 | CN | 110892421 A | 17-03-2020 |
| | | | CN | 110914838 A | 24-03-2020 |
| | | | EP | 3631693 A1 | 08-04-2020 |
| | | | EP | 3635638 A1 | 15-04-2020 |
| | | | US | 2020125826 A1 | 23-04-2020 |
| | | | US | 2020225153 A1 | 16-07-2020 |
| | | | WO | 2018219836 A1 | 06-12-2018 |
| | | | WO | 2018219837 A1 | 06-12-2018 |
| US 10313018 | B2 | 04-06-2019 | CN | 107533340 A | 02-01-2018 |
| | | | EP | 3054368 A1 | 10-08-2016 |
| | | | EP | 3254168 A1 | 13-12-2017 |
| | | | JP | 6768679 B2 | 14-10-2020 |
| | | | JP | 2018509696 A | 05-04-2018 |
| | | | US | 2018019822 A1 | 18-01-2018 |
| | | | WO | 2016124716 A1 | 11-08-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10313018 B

- US 10095262 B

**Non-patent literature cited in the description**

- **VALLEY, GEORGE C. et al.** Application of laser speckle to randomized numerical linear algebra. *Optical Data Science: Trends Shaping the Future of Photonics. Vol. 10551, International Society for Optics and Photonics,* 2018